# EUROPÄISCHE PATENTSCHRIFT

(11) **EP 0 881 423 B1**
(45) Veröffentlichungstag und Bekanntmachung des Hinweises auf die Patenterteilung: **01.03.2006**
(21) Anmeldenummer: 98109521.9
(22) Anmeldetag: 26.05.1998
(51) Int. Cl.: F16L 59/06, B60R 13/08, F01N 7/14, F02B 77/11

(54) **Hitzeschild mit Schallisolierung**
Heat-shield with sound insulation
Bouclier thermique avec isolation phonique

(30) Priorität: 27.05.1997 DE 19722037
(43) Veröffentlichungstag der Anmeldung: 02.12.1998
(73) Patentinhaber: Carcoustics (Liechtenstein) AG, 9493 Mauren (LI)
(72) Erfinder: Pirchl, Gerhard, 5708 Birrwil (CH)
(74) Vertreter: Cohausz & Florack

(56) Entgegenhaltungen:
- EP-A- 0 697 559
- DE-A- 2 037 135
- US-A- 3 237 716
- US-A- 4 487 289
- US-A- 5 464 952
- US-A- 5 590 524
- US-A- 5 603 297

## Beschreibung

Gegenstand der Erfindung ist ein Hitzeschild mit Schallisolierung nach dem Oberbegriff des Patentanspruchs 1. Derartige Hitzeschilde werden zum Beispiel in Kraftfahrzeugen eingesetzt, um z.B. den Auspufftopf und andere hitzeführende Teile der Auspuffanlage - unter anderem auch den Katalysator - so von der Karosserie abzuschirmen, daß keine nennenswerte Wärmestrahlung auf die Karosserie trifft und gleichzeitig eine wirksame Schallisolierung erfolgt.

Aus dem Stand der Technik ist es bekannt, als Hitzeschild ein Aluminiumblech zu verwenden, welches nächst der Wärmequelle, z.B. einem Auspuffrohr, angeordnet ist und in der Art einer dreidimensional verformten Schale das Auspuffrohr nach oben hin in Richtung zur Karosserie abdeckt. Bei Verwendung eines derartigen einfachen Aluminiumblechs besteht aber der Nachteil, daß es zwar durch entsprechende Anbringung von Riffelungen und dergleichen gut als Hitzeschild wirkt, daß es aber keine oder keine nennenswerte Schallisolierung bietet. Es ist ferner bekannt, eine Schallisolierung in Form eines geschäumten Minerals auf die Rückseite eines Wärmeabschirmbleches aufzubringen und - um eine bestimmte Schallisolierung überhaupt zu erreichen - das Abschirmblech mit entsprechenden Lochungen zu perforieren.
Damit besteht aber der Nachteil, daß das Wärmeabschirmblech seine wärmeabschirmende Wirkung größtenteils verliert, weil die Lochungen dafür sorgen, daß ein großer Teil der Wärmemenge hindurchgeht und außerdem besteht der Nachteil, daß die auf der Rückseite dieses Abschirmblechs angeordnete Schallisolierung nur schlecht wirksam ist.

Es ist im übrigen bekannt, eine Schallisolationsschicht aus einem mineralischen Stoff, z.B. einem geschäumten Stoff, auf die Innenseite, d.h. die der Wärmequelle zugewandten Seite, des Aluminiumbleches anzubringen, was mit dem Nachteil verbunden ist, daß dieser Mineralschaumstoff hoher Wärmebelastung ausgesetzt ist und das Wärmeabschirmblech nicht mehr genügend Wärme in Richtung auf die wärmeabgebende Quelle zurückstrahlen kann. Damit fehlt es also an der wärmeabschirmwirkung, denn ein großer Teil der Wärme wird nicht mehr auf die Quelle zurückgestrahlt, sondern geht durch das wärmeabschirmblech hindurch in Richtung auf die Karosserie. Die Abschirmwirkung dieser Anordnung ist also relativ schlecht.

Aus der DE-A-2037135 ist eine Abgasleitung für aufgeladene Brennkraftmaschinen bekannt, die mit einer Verkleidung versehen ist, um das Bedienungspersonal an der Brennkraftmaschine vor zu hoher Wärmeeinwirkung zu schützen. Mit Abstand zu der geschlossenen Verkleidung ist eine Luftleiteinrichtung angeordnet, die mit unteren Öffnungen für das Einströmen von Kühlluft in den Raum zwischen der Luftleiteinrichtung und der Verkleidung sowie mit oberen Öffnungen für das Ausströmen der Kühlluft aus diesem Raum versehen ist. In einer alternativen Ausführung ist der Raum zwischen der Luftleiteinrichtung und der geschlossenen Verkleidung in der Zone der höchsten Temperatur der Verkleidung mit einem erzwungenen Kühlluftstrom beaufschlagt. Die Verkleidung ist an ihrer der Abgasleitung zugewandten Seite mit einer Isolation versehen. Der DE-A-2037135 lässt sich nicht entnehmen, ob es sich bei der auf der Verkleidung angebrachten Isolation um eine Schallabsorptionsschicht handelt. Möglicherweise handelt es sich bei dieser Isolation lediglich um eine aus kompaktem Material bestehende Wärmeisolation, die nicht porös ist und somit keine nennenswerte schallabsorbierende Wirkung aufweist.

Der vorliegenden Erfindung liegt die Aufgabe zugrunde, ein Hitzeschild mit Schallisolierung so weiterzubilden, dass bei wesentlich verbesserter Wärmeabschirmung eine noch bessere Schallisolierung erreicht wird.

Erfindungsgemäß wird diese Aufgabe durch ein Hitzeschild mit den Merkmalen des Anspruchs 1 gelöst.

Vorteilhafte Ausgestaltungen und Weiterbildungen der Erfindung ergeben sich aus den Unteransprüchen.

Gemäß der Erfindung ist zwischen der Innenseite, d.h. der der Wärme- und Schallquelle zugewandten Seite eines herkömmlichen Wärmeabschirmbleches und einer Trägerschicht mindestens teilweise ein Luftspalt vorgesehen, wobei auf der Innenseite dieser Trägerschicht eine Schallabsorptionsschicht, z.B. in Form eines Faservlieses, befestigt wird, welches hitzefest ausgebildet ist.

Mit der gegebenen technischen Lehre wird also ein mehrschichtiger Aufbau erzielt, denn an der Innenseite eines herkömmlichen Wärmeabschirmbleches wird zunächst ein Luftspalt geschaffen und zur Begrenzung dieses Luftspalts nach innen wird eine Trägerschicht an der Innenseite dieses Wärmeabschirmbleches angeordnet. Diese Trägerschicht ist ein Netz oder eine perforierte Folie.

Als schallabsorbierende Schicht ist vorzugsweise ein organisches oder ein anorganisches Faservlies vorgesehen, welches unmittelbar mit dem Träger verbunden wird. Als andere Befestigungsmöglichkeit ist vorgesehenes, diese schallabsorbierende Schicht aufzuclipsen oder über andere mechanische Verankerungsmittel zu verankern, wie z.B. durch einschiessbare Dübel, Krallen oder dergleichen mehr.

Mit der gegebenen technischen Lehre ergibt sich also der Vorteil, daß die wärme- und schallabgebende Quelle zunächst einmal auf günstige Weise schallgedämmt wird, denn die schalldämmende Schicht in Form des angegebenen Faservlieses ist nächst dieser wärme- und schallabgebenden Quelle angeordnet, und es gibt damit sehr gute Schalldämm-Maße. Die Schallabsorption ist damit aufgrund dieses erfindungsgemässen Aufbaus sehr günstig.

Weiterer Vorteil der Erfindung ist, daß nun auch die Wärmeisolierung günstig ist, denn es hat sich gezeigt, daß ein großer Teil der Wärme durch die schallabsorbierende Schicht und durch den Träger hindurch geht und auf die Innenseite des Wärmeabschirmbleches trifft. Dort wird der größte Teil der Wärme an der Oberfläche reflektiert und wieder zur wärme- und schallabgebenden Quelle zurückgeleitet. Auf diese Weise wird dafür gesorgt, daß das wärmeabschirmblech sich nicht stark aufheizt und nur wenig Wärme hindurchlässt.

Statt dem hier beschriebenen Faservlies, welches z.B. ein organisches oder anorganisches Material sein kann, können auch andere hitzefeste Materialien verwendet werden, die geeignet sind, über entsprechende Befestigungsmaßnahmen an einen derartigen Träger befestigt zu werden. Beispielsweise kommen auch geschäumte Mineralstoffe (geschäumter Glimmer) in Betracht, Mineralfasern, Blähtonmaterialien und dergleichen mehr. Wichtig ist, daß diese Materialien mindestens hitzefest bis etwa 400°C sind und ein gutes Schallabsorptionsvermögen haben.

Um die Recyclingfähigkeit dieses neuartigen Hitzeschildes zu gewährleisten, ist es vorgesehen, daß die an der Innenseite des Wärmeabschirmbleches angeordnete zweite Schicht, bestehend aus dem Trägermaterial und der auf dem Träger befestigten Schallabsorptionsschicht, lösbar mit dem Wärmeabschirmblech befestigt ist. Derartige lösbare Verbindungen können einfach dadurch verwirklicht werden, daß an dem Wärmeabschirmblech seitliche Blechzungen angeordnet sind, die herumgebogen werden und so die Randseiten dieser zweiten Schicht einfassen und halten.

In einer anderen Ausgestaltung können andere lösbare Befestigungsmittel eingesetzt werden, wie z.B. Clipse, Krallen oder dergleichen mehr.

Ebenso kann es vorgesehen sein, daß die entsprechenden Montagehalterungen durch beide Schichten (Aluminium-Wärmeabschirmblech) und durch die Schallabsorptionsschicht hindurchgehen und hiermit mit der Befestigung des Wärmeabschirmbleches an der Karosserie gleichzeitig auch diese Trägerschicht mit dem Schallabsorptionsmaterial befestigt wird.

Zur Ausbildung des Wärmeabschirmbleches ist zu bemerken, daß grundsätzlich jedes Wärmeabschirmblech bekannter Bauart verwendet werden kann, insbesondere auch mehrlagig ausgebildete Wärmeabschirmbleche.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

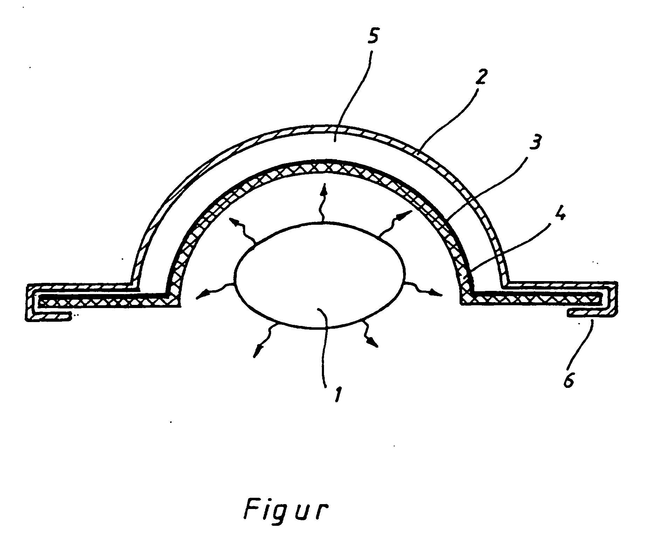

Im folgenden wird die Erfindung anhand von einer lediglich einen Ausführungsweg darstellenden Zeichnung näher erläutert. Hierbei gehen aus der Zeichnung und ihrer Beschreibung weitere erfindungswesentliche Merkmale und Vorteile der Erfindung hervor.

Die einzige Zeichnungsfigur zeigt schematisch einen Schnitt durch das Hitzeschild mit Schallisolierung.

Eine wärme- und schallemittierende Quelle 1 ist entsprechend abzuschirmen.
Dazu ist ein Wärmeabschirmblech 2 bekannter Bauart vorgesehen, welches zumindest an der Innenseite, d.h. der Wärme- und Schallquelle 1 zugewandten Fläche, stark reflektierend ausgebildet ist. Das Wärmeabschirmblech 2 besteht in bekannter Weise aus einem z.B. 0,5 bis 1,5 mm starken Aluminiumblech entsprechender Formgebung oder aus einer Kombination mehrere Bleche oder Folien.

In einem definierten Abstand zur Innenseite des Wärmeabschirmbleches 2 ist eine Trägerschicht 3 angeordnet, so daß ein freier Luftspalt 5 zwischen Wärmeabschirmblech und Trägerschicht verbleibt.
Die Trägerschicht 3 besteht vorzugsweise aus einer etwa 0,2 mm starken Aluminiumfolie.
Auf der Innenseite der Trägerschicht 3 ist eine Schallabsorptionsschicht 4 aufgebracht. Die Schallabsorptionsschicht 4 besteht z.B. aus einem organischen oder anorganischen, hitzebeständigen Faservlies und ist vorzugsweise mechanisch mit der Trägerschicht 3 verbunden.

Um ein einfaches Recycling des schallisolierenden Hitzeschildes zu ermöglichen, ist es notwendig, daß das Wärmeabschirmblech 2 und die Trägerschicht 3 mit Schallisolationsschicht 4 leicht voneinander trennbar sind. Die Verbindung zwischen Wärmeabschirmblech 2 und Trägerschicht 3 wird daher bevorzugt durch Bördelung der Randbereiche 6 des Wärmeabschirmbleches 2 erreicht, wobei die Trägerschicht 3 in der Bördelkante eingeklemmt und festgelegt wird.

## Patentansprüche

1. Hitzeschild zur Wärme- und Schallisolierung einer wärme- und Schallquelle (1), mit einem Wärmeabschirmblech (2), an dessen der Wärme- und Schallquelle (1) zugewandten Seite eine Trägerschicht (3) derart angeordnet ist, dass zwischen Wärmeabschirmblech (2) und Trägerschicht (3) ein definierter Luftspalt (5) verbleibt,
**dadurch gekennzeichnet, dass** auf der der Wärme- und Schallquelle (1) zugewandten Seite der Trägerschicht (3) eine auf dieser befestigte Schallabsorptionsschicht (4) nächst der Wärme- und Schallquelle (1) angeordnet ist, und dass die Trägerschicht (3) ein Netz oder eine perforierte Folie ist, so dass die wärme- und schallabgebende Quelle (1) zunächst schallgedämmt wird und ein großer Teil der wärme durch die Schallabsorptionsschicht (4) und die Trägerschicht (3) hindurch geht.

2. Hitzeschild nach Anspruch 1, **dadurch gekennzeichnet, dass** das Wärmeabschirmblech (2) aus einer oder mehreren Lagen Aluminiumblech oder Aluminiumfolie besteht.

3. Hitzeschild nach Anspruch 1 oder 2, **dadurch gekennzeichnet, dass** das Wärmeabschirmblech (2) auf seiner der Wärme- und Schallquelle (1) zugewandten Seite reflektierend ausgebildet ist.

4. Hitzeschild nach einem der Ansprüche 1 bis 3,
**dadurch gekennzeichnet, dass** die Trägerschicht (3) aus einer perforierten Metallfolie, insbesondere einer perforierten, etwa 0,2 mm starken Aluminiumfolie besteht.

5. Hitzeschild nach einem der Ansprüche 1 bis 4,
**dadurch gekennzeichnet, dass** die Schallabsorptionsschicht (4) ein Faservlies aus organischen und/oder anorganischen Materialien ist.

6. Hitzeschild nach einem der Ansprüche 1 bis 5,
**dadurch gekennzeichnet, dass** die Trägerschicht (3) lösbar mit dem Wärmeabschirmblech (2) verbunden ist.

7. Hitzeschild nach einem der Ansprüche 1 bis 6,
**dadurch gekennzeichnet, dass** die Verbindung zwischen Wärmeabschirmblech (2) und Trägerschicht (3) durch Bördelung der Randbereiche (6) des Wärmeabschirmbleches (2) ausgeführt ist, wobei die Trägerschicht (3) in der Bördelkante eingeklemmt und festgelegt ist.

## Revendications

1. Bouclier thermique pour l'isolation thermique et phonique d'une source thermique et sonore (1), avec une tôle faisant bouclier thermique (2), sur la face dirigée vers la source thermique et sonore (1) de laquelle une couche support (3) est disposée de façon à ménager entre la tôle faisant bouclier thermique (2) et la couche support (3) une fente d'aération définie (5), **caractérisé en ce que** sur la face qui est dirigée vers la source thermique et sonore (1) de la couche support (3), une couche d'absorption phonique (4) fixée sur cette dernière est disposée après la source thermique et sonore (1) et **en ce que** la couche support (3) est un filet ou un film perforé, pour que la source thermique et phonique (1) soit d'abord insonorisée et qu'une grande partie de la chaleur traverse la couche d'absorption phonique (4) et la couche support (3).

2. Bouclier thermique selon la revendication 1, **caractérisé en ce que** la tôle faisant bouclier thermique (2) est composée d'une ou de plusieurs couches de tôle d'aluminium ou de film d'aluminium.

3. Bouclier thermique selon la revendication 1 ou 2, **caractérisé en ce que** sur sa face dirigée vers la source thermique et sonore (1), la tôle faisant bouclier thermique (2) est conçue de façon réfléchissante.

4. Bouclier thermique selon l'une quelconque des revendications 1 à 3, **caractérisé en ce que** la couche support (3) est composée d'un film métallique perforé, notamment d'un film d'aluminium perforé d'une épaisseur de 0,2 mm environ.

5. Bouclier thermique selon l'une quelconque des revendications 1 à 4, **caractérisé en ce que** la couche d'absorption sonore (4) est un tissu fibreux en matières organiques et/ou non organiques.

6. Bouclier thermique selon l'une quelconque des revendications 1 à 5, **caractérisé en ce que** la couche support (3) est reliée de façon amovible avec la tôle faisant bouclier thermique (2).

7. Bouclier thermique selon l'une quelconque des revendications 1 à 6, **caractérisé en ce que** la liaison entre la tôle faisant bouclier thermique (2) et la couche support (3) est réalisée par bordage des zones de bordures (6) de la tôle faisant bouclier thermique (2), la couche support (3) étant serrée et fixée dans le bord relevé.

## Claims

1. A heat shield for the heat insulation and sound insulation of a source of heat and sound (1), with a heat shielding plate (2) that is provided with a carrier layer (3) on its side that faces the source of heat and sound (1), wherein the carrier layer is arranged such that a defined air gap (5) remains between the heat shielding plate (2) and the carrier layer (3), **characterized in that** a sound absorption layer (4) fixed on the side of the carrier layer (3) that faces the source of heat and sound (1) is arranged next to the source of heat and sound (1), and **in that** the carrier layer (3) consists of a net or a perforated foil such that the sound emitted by the source of heat and sound (1) is initially absorbed and a large quantity of the heat passes through the sound absorption layer (4) and the carrier layer (3).

2. The heat shield according to Claim 1, **characterized in that** the heat shielding plate (2) consists of one or more layers of an aluminum sheet or aluminum foil.

3. The heat shield according to Claim 1 or 2, **characterized in that** the heat shielding plate (2) is realized in a reflecting fashion on its side that faces the source of heat and sound (1).

4. The heat shield according to one of Claims 1-3, **characterized in that** the carrier layer (3) consists of a perforated metal foil, particularly a perforated aluminum foil with a thickness of approximately 0.2 mm.

5. The heat shield according to one of Claims 1-4, **characterized in that** the sound absorption layer (4) consists of a fibrous web of organic and/or inorganic materials.

6. The heat shield according to one of Claims 1-5, **characterized in that** the carrier layer (3) is detachably connected to the heat shielding plate (2) .

7. The heat shield according to one of Claims 1-6, **characterized in that** the connection between the heat shielding plate (2) and the carrier layer (3) is produced by beading the edge region (6) of the heat shielding plate (2), wherein the carrier layer (3) is clamped and fixed in the beaded edge.
